# EUROPEAN PATENT APPLICATION

(11) **EP 3 076 050 A1**
(43) Date of publication of application: **05.10.2016**
(21) Application number: 14866597.9
(22) Date of filing: 24.10.2014
(51) Int. Cl.: F16H 29/12, F16H 3/66, F16H 21/10, F16H 31/00

(54) **CONTINUOUSLY VARIABLE TRANSMISSION**

(30) Priority: 29.11.2013 JP 2013247211
(71) Applicant: Nakagawa Minoru, Yokohama-shi, Kanagawa 224-0044 (JP)
(72) Inventor: Nakagawa Minoru, Yokohama-shi, Kanagawa 224-0044 (JP)
(74) Representative: Studio Torta S.p.A.
(86) International application number: PCT/JP2014/078295
(87) International publication number: WO 2015/079837

(57) **Abstract**

The present invention provides a continuously variable transmission mechanism with a new constitution. A continuously variable transmission according to the present invention is characterized in that A continuously variable transmission comprises;
a push arm with a power roller and a drive roller,
a support frame at an input side for supporting a supporting point of the push arm,
a cam arm with a cam mount at upper side and lower side thereof,
an outer circumferential support frame for supporting the cam arm,
a drive arm with a pawl,
a ring gear having a ratchet mechanism of meshing with the pawl,
wherein the cam arm is capable of being stored or being pushed out, and a continuously variable speed drive is carried out by from the output on one-on-one level of the input made by support frame at an input side to the continuously output. Furthermore, in preferable embodiment of the continuously variable transmission according to the present invention, the transmission is characterized by having further an outer cam with a cam mount in a direction of a central shaft at an outside of the outer circumferential support frame.

## Description

### Technical Field

The present invention relates to a continuously variable transmission, in particular relates to a continuously variable transmission among the power transmissions.

### Background Art

As a variable reduction gear of a small size and a light weight, capable of increasing the reduction gear ratio, a variable reduction gear comprises a cam for rotating in coordination with the rotation of the input shaft, a number of pinions placed around a large transmission gear in conjunction with and coupled with an output shaft, and fit in well with the large transmission gear, a number of oscillating arms which one end pivots a rotary shaft of the pinion via unidirectional clutch, and other end engages to the cam, wherein the oscillating arms carry out the oscillating movement in conjunction with the rotation movement of the cam (Patent literature 1).

### Prior art literature

### Patent literature

Patent literature 1: JPA S55-126154

### Disclosure of the Invention

### Problems to be resolved by the invention

However, including the above patent literature 1, the practically used rotation transmission system in the planetary gear arrangement is carried out by a stepwise shift transmission method by the lock-up means, and it has been practically insufficient to obtain a continuously variable transmission.

Therefore, a continuously variable transmission drive mechanism having a new constitution completely different from a stepwise shift transmission by the lock-up means, a braking control or a control drive depending on the other motive energy and or the like is desired. Therefore, the present invention made in consideration of the above problems, the object of the present invention provides a continuously variable transmission drive mechanism with a new constitution.

### Means of solving the problems

In order to attain the above object, the present inventor made strenuous studies as to the planetary gear arrangement. As a result of this, the inventor discovered the present invention.

The continuously variable transmission according to the present invention is characterized in that a continuously variable transmission comprises;
a push arm with a power roller and a drive roller,
a support frame at an input side for supporting a supporting point of the push arm,
a cam arm with a cam mount at upper side and lower side thereof,
an outer circumferential support frame for supporting the cam arm,
a drive arm with a pawl,
a ring gear having a ratchet mechanism of meshing with the pawl,
wherein the cam arm is capable of being stored or being pushed out, and a continuously variable speed drive is carried out by from the output on one-on-one level of the input made by the support frame at an input side to the continuously output.

Furthermore, in a preferable embodiment of the continuously variable transmission according to the present invention, a continuously variable transmission is characterized in that the transmission has further an outer cam with a cam mount in a direction of a central shaft at an outside of the outer circumferential support frame.

Furthermore, in a preferable embodiment of the continuously variable transmission according to the present invention, a continuously variable transmission is characterized in that the transmission has further a control gear meshing with a part of the outer cam.

Furthermore, in a preferable embodiment of the continuously variable transmission according to the present invention, a continuously variable transmission is characterized in that a continuously variable transmission comprises;
a push arm with a power roller and a drive roller,
a sun gear at an output side,
a pinion gear meshing with the sun gear at an output side,
a planetary gear of meshing with the pinion gear,
a support frame at an input side for supporting a supporting point of the push arm and supporting a shaft of the pinion gear and a shaft of the planetary gear,
a cam arm with a cam mount at upper side and lower side thereof,
an outer circumferential support frame for supporting the cam arm,
a drive arm with a pawl,
a ring gear having a ratchet mechanism of meshing with the pawl,
wherein the cam arm is capable of being stored or being pushed out, and a continuously variable speed drive is carried out by from the output on one-on-one level of the input made by the support frame at an input side to the continuously output.

Furthermore, in a preferable embodiment of the continuously variable transmission according to the present invention, a continuously variable transmission is characterized in that the transmission has further an outer cam with a cam mount in a direction of a central shaft at an outside of the outer circumferential support frame.

Furthermore, in a preferable embodiment of the continuously variable transmission according to the present invention, a continuously variable transmission is characterized in that the transmission has further a control gear meshing with a part of the outer cam.

Furthermore, in a preferable embodiment of the continuously variable transmission according to the present invention, a continuously variable transmission is characterized in that an input at a single central shaft produced by the support frame at an input side integrated with the secondary ring gear of a set of the secondary planetary gear attains a drive by connecting with the sun gear integrated with the secondary support frame of the secondary planetary gear through the planetary gear and the pinion gear to carry out a drive by from an output made by the sun gear at an output side on one-on-one level of the input made by the support frame at an input side to an output of a continuously variable transmission.

Furthermore, in a preferable embodiment of the continuously variable transmission according to the present invention, a continuously variable transmission is characterized in that via the planetary gear and the pinion gear, the sun gear integrated with the secondary ring gear of a set of the secondary planetary gear attains a drive by connecting the ring gear integrated with the secondary support frame of the secondary planetary gear and the pinion gear to carry out a drive by from an output made by the sun gear at the output side on one-on-one level of the input made by the support frame at an input side to an output of a continuously variable transmission.

### Effect of Invention

According to the continuously variable transmission of the present invention has an advantageous effect that it is possible to considerably reduce a return interval and a time of a reciprocating drive of a drive arm (7a, b, c) by means of a control drive for an input direction of a ring gear, and it is possible to obtain a mechanical structure capable of accommodating to an variable transmitted output from an input direction by the use of the ring gear as a gear at an output side. Furthermore, according to the continuously variable transmission of the present invention has an advantageous effect that according to a drive made by a constitution of the planetary gear, a rotation and drive of a ring gear escaping from a load at an outside side according to an input is changed to a rotation drive of an opposite direction for a direction of an input via a pinion gear, and thereby attaining a constitution capable of controlling and driving a direction of an input from a speed of an input universally and continuously, and as a result of this, it is possible to considerably reduce a return interval and a time of a reciprocating drive of a drive arm (7a, b, c) by means of a control drive for an input direction of a ring gear, and it is possible to obtain a mechanical structure capable of accommodating to an variable transmitted output from an input direction by the use of the ring gear as a gear at an output side.

### Brief Description of the Drawings

[Fig. 1]

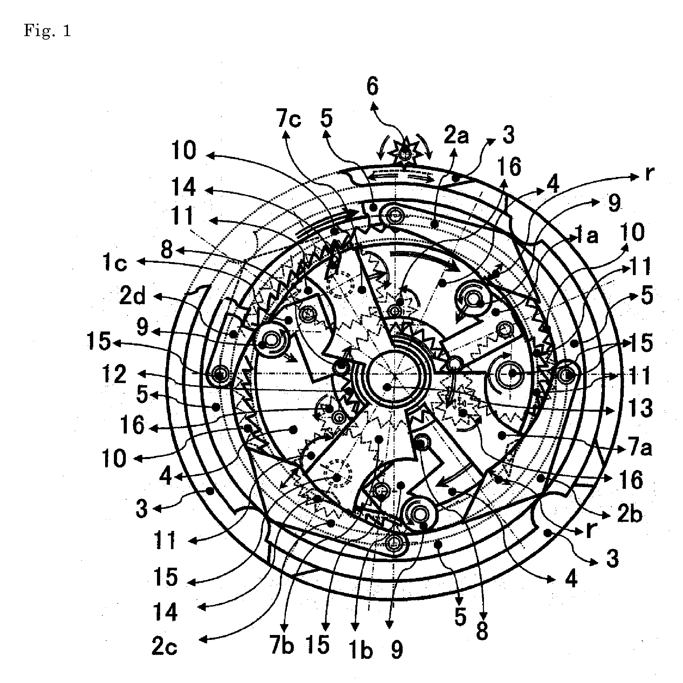

   Figure 1 gives an explanatory diagram showing a structure or method of a drive for controlling an input direction of a ring gear type continuously variable transmission mechanism (Partially omitted).
[Fig. 2]

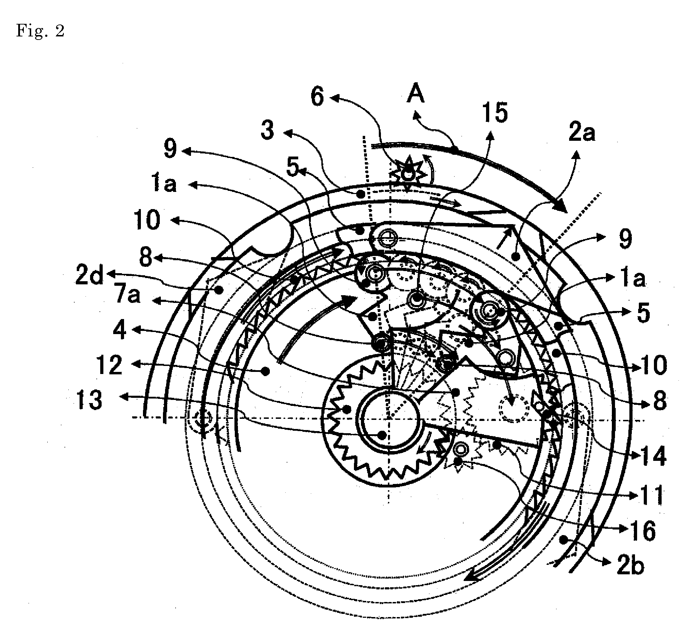

   Figure 2 gives an explanatory diagram showing drive positions of each member shown divided within an input angle, "A", regarding a drive on one-on-one level of the input in a drive for controlling an input direction of a ring gear type continuously variable transmission mechanism (Partially omitted). (which shows a low gear region)
[Fig. 3]

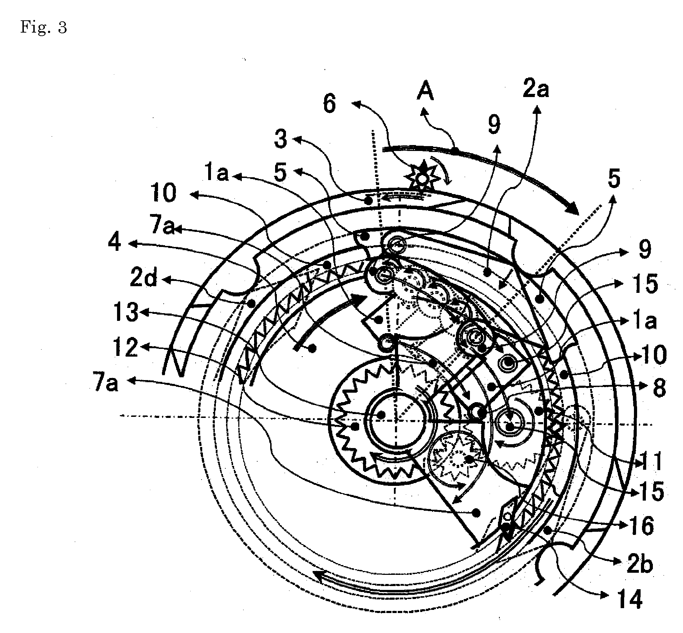

   Figure 3 gives an explanatory diagram showing drive positions of each member shown divided within an input angle, "A", regarding a high gear drive in a drive for controlling an input direction of a ring gear type continuously variable transmission mechanism (Partially omitted).
[Fig. 4]

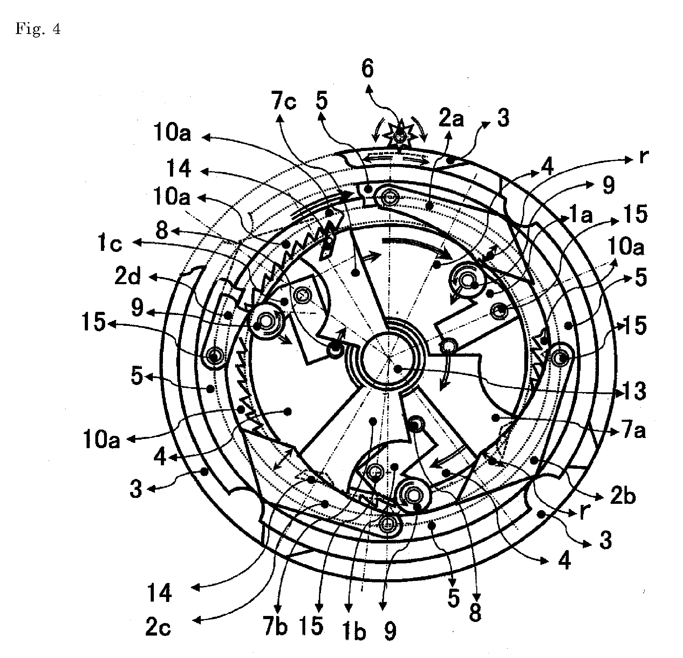

   Figure 4 gives an explanatory diagram showing an example of a drive for controlling an input direction of a ring gear type continuously variable transmission mechanism of a mechanical structure capable of accommodating to a variable transmitted output from an input direction by the use of the ring gear as a gear at an output side (Partially omitted).
[Fig. 5]

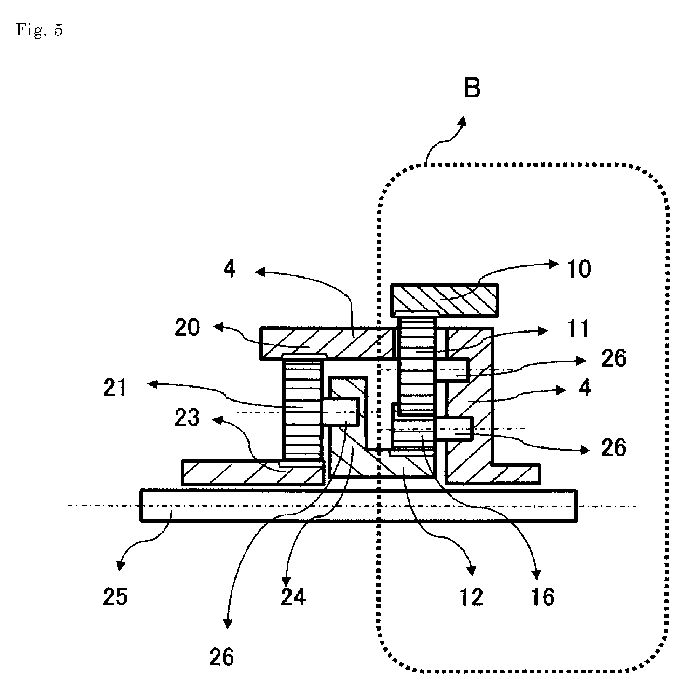

   Figure 5 gives a cross-sectional view showing an example of a twin planet active drive continuously variable transmission (Partially omitted).
[Fig. 6]

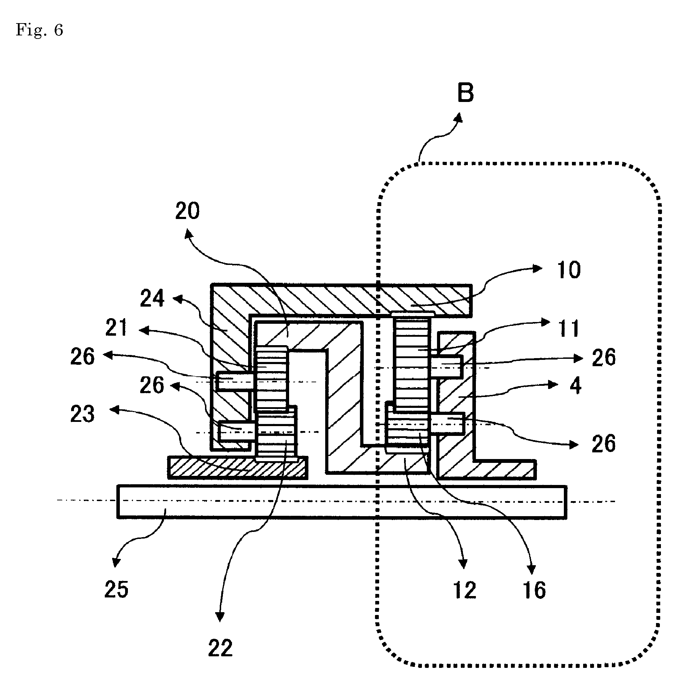

   Figure 6 gives a cross-sectional view showing an example of a twin planet active drive continuously variable transmission (Partially omitted).

### Mode for Carrying Out the Invention

The continuously variable transmission according to the present invention is characterized in that a continuously variable transmission comprises;
a push arm with a power roller and a drive roller,
a support frame at an input side for supporting a supporting point of the push arm,
a cam arm with a cam mount at upper side and lower side thereof,
an outer circumferential support frame for supporting the cam arm,
a drive arm with a pawl,
a ring gear having a ratchet mechanism of meshing with the pawl,
wherein the cam arm is capable of being stored or being pushed out, and a continuously variable speed drive is carried out by from the output on one-on-one level of the input made by the support frame at an input side to the continuously output. As the power roller, it is also not particularly limited as long as it is possible to push an inner wall surface of the outer circumferential support frame. As the drive roller, although it is named as "roller", it is not particularly limited as long as it is possible to push a drive arm, it is not necessarily need to be a "roller".

As a support frame at an input side, it is also not particularly limited. Moreover, the support frame at an input side makes it possible to support a supporting point of the push arm to move a drive arm by the use of the supporting point as a shaft.

Moreover, regarding the cam arm with a cam mount at upper side and lower side thereof, it is also not particularly limited as long as it is possible to push the power roller of the push arm by the use of the cam mount to a direction of the central shaft. Moreover, although it is described as both "upper side and lower side thereof", a cam mount can be set in only a side (direction) of the central shaft, or a cam mount can be set in only an opposite side (direction) of the circumference direction comparing with a side of the central shaft. Because it is possible to push the power roller of the push arm to a direction of the central shaft by the use of the cam mount if the cam mount exists at one side.

Moreover, the cam arm can be supported by the outer circumferential support frame, and thereby it being possible to store or push out the cam arm via a supporting point of the cam arm (for example, see "r" of Figure 4). Furthermore, the drive arm has a pawl or pawls, and thereby the drive arm making possible to constitute an one way mechanism between the ring gear having a ratchet mechanism of meshing with the pawl. Moreover, the outer circumferential support frame makes it possible to have a surface of an inner wall of a circle pattern such as a perfect circle pattern, to contact the power roller of the push arm to the surface of an inner wall. The surface of an inner wall is not particularly limited as long as it is possible to contact the power roller to the surface of an inner wall.

Furthermore, in a preferable embodiment of the continuously variable transmission according to the present invention, a continuously variable transmission is characterized in that the transmission has further an outer cam with a cam mount in a direction of a central shaft at an outside of the outer circumferential support frame. The outer cam makes it possible to support the storage or push out of the cam arm. The cam mount of the outer cam forming a projection to a direction of the central shaft makes it possible to contact to the cam arm and / or a cam mount existing at a circumference side of the cam arm to move the power roller to a direction of the central shaft, and thereby it being possible to change a low gear region to high gear region. If the cam mount of the cam arm is made softly, it is possible to carry out the continuously variable transmission softly.

Furthermore, in a preferable embodiment of the continuously variable transmission according to the present invention, a continuously variable transmission is characterized in that the transmission has further a control gear meshing with a part of the outer cam. The control gear makes it possible to rotate and move the outer cam via rotation and movement of the control gear, and thereby supporting the storage or push out of the cam arm. Moreover, if the cam arm is stored, the power roller can not contact to the cam arm, and as a result, the cam arm continues to push the surface of the inner wall of an outer circumferential support frame, and thereby it being possible to form a low gear region.

Furthermore, in another preferable embodiment of the continuously variable transmission according to the present invention, a continuously variable transmission is characterized in that a continuously variable transmission comprises;
a push arm with a power roller and a drive roller,
a sun gear at an output side,
a pinion gear meshing with the sun gear at an output side,
a planetary gear of meshing with the pinion gear,
a support frame at an input side for supporting a supporting point of the push arm and supporting a shaft of the pinion gear and a shaft of the planetary gear,
a cam arm with a cam mount at upper side and lower side thereof,
an outer circumferential support frame for supporting the cam arm,
a drive arm with a pawl,
a ring gear having a ratchet mechanism of meshing with the pawl,
wherein the cam arm is capable of being stored or being pushed out, and a continuously variable speed drive is carried out by from the output on one-on-one level of the input made by the support frame at an input side to the continuously output. That is, comparing with the above embodiments, a sun gear at an output side, a pinion gear meshing with the sun gear at an output side, and a planetary gear of meshing with the pinion gear, are added. Although in the above embodiments, the ring gear exists at an output side, in the present embodiments, the sun gear exists at an output side. As the pinion gear, it is not particularly limited as long as the pinion gear can mesh with the sun gear. As the planetary gear, it is not particularly limited as long as the planetary gear can mesh with the pinion gear.

As the power roller, it is also not particularly limited as long as it is possible to push an inner wall surface of the outer circumferential support frame. As the drive roller, although it is named as "roller", it is not particularly limited as long as it is possible to push a drive arm, it is not necessarily need to be a "roller". As a support frame at an input side, it is also not particularly limited. Moreover, the support frame at an input side makes it possible to support a supporting point of the push arm to move a drive arm by the use of the supporting point as a shaft. Moreover, regarding the cam arm with a cam mount at upper side and lower side thereof, it is also not particularly limited as long as it is possible to push the power roller of the push arm by the use of the cam mount to a direction of the central shaft. Moreover, although it is described as both "upper side and lower side thereof", a cam mount can be set in only a side (direction) of the central shaft, or a cam mount can be set in only an opposite side (direction) of the circumference direction comparing with a side of the central shaft. Because it is possible to push the power roller of the push arm to a direction of the central shaft by the use of the cam mount if the cam mount exists at one side.

Moreover, the cam arm can be supported by the outer circumferential support frame, and thereby it being possible to store or push out the cam arm via a supporting point of the cam arm (for example, see "r" of Figure 1). Furthermore, the drive arm has a pawl or pawls, and thereby the drive arm making possible to constitute an one way mechanism between the ring gear having a ratchet mechanism of meshing with the pawl.

Furthermore, in a preferable embodiment of the continuously variable transmission according to the present invention, a continuously variable transmission is characterized in that the transmission has further an outer cam with a cam mount in a direction of a central shaft at an outside of the outer circumferential support frame. The outer cam makes it possible to support the storage or push out of the cam arm. The cam mount of the outer cam forming a projection to a direction of the central shaft makes it possible to contact to the cam arm and / or a cam mount existing at a circumference side of the cam arm to move the power roller to a direction of the central shaft, and thereby it being possible to change a low gear region to high gear region. If the cam mount of the cam arm is made softly, it is possible to carry out the continuously variable transmission softly.

Furthermore, in a preferable embodiment of the continuously variable transmission according to the present invention, a continuously variable transmission is characterized in that the transmission has further a control gear meshing with a part of the outer cam. The control gear makes it possible to rotate and move the outer cam via rotation and movement of the control gear, and thereby supporting the storage or push out of the cam arm. Moreover, if the cam arm is stored, the power roller can not contact to the cam arm, and as a result, the cam arm continues to push the surface of the inner wall of an outer circumferential support frame, and thereby it being possible to form a low gear region.

Furthermore, in a preferable embodiment of the continuously variable transmission according to the present invention, a continuously variable transmission is characterized in that an input at a single central shaft produced by the support frame at an input side integrated with a set of the secondary ring gear of the secondary planetary gear attains a drive by connecting with the sun gear integrated with the secondary support frame of the secondary planetary gear through the planetary gear and the pinion gear to carry out by from an output at the sun gear of the output side on one-on-one level of the input made by support frame at an input side to an output of a continuously variable transmission. A constitution of integrating the support frame in the above embodiment with the ring gear of a set of the secondary planetary gear at a single central shaft, and a constitution of integrating the sun gear in the above embodiment with the support frame of the secondary planetary gear make it possible to improve change gear ratio extremely.

Furthermore, in a preferable embodiment of the continuously variable transmission according to the present invention, a continuously variable transmission is characterized in that via the planetary gear and the pinion gear, the sun gear integrated with a set of the secondary ring gear of the secondary planetary gear attains a drive by connecting the ring gear integrated with the secondary support frame of the secondary planetary gear and the pinion gear to carry out by from an output at the sun gear of the output side on one-on-one level of the input made by support frame at an input side to an output of a continuously variable transmission. A constitution of integrating the sun gear in the above embodiment with the ring gear of a set of the secondary planetary gear at a single central shaft, and a constitution of integrating the ring gear in the above embodiment with the support frame of the secondary planetary gear make it possible to improve change gear ratio extremely.

### Example

At this moment, although Examples of the continuously variable transmission according to the present invention will be concretely explained, but the present invention is not intended to be interpreted as being limited to the following Examples. Moreover, it need scarcely be said that it is possible to change properly without extending beyond the subject-matter of the present invention.

With reference to Figures, an explanation of an embodiment of the continuously variable transmission according to the present invention as example will be followed.

At first, an example of the continuously variable transmission according to the present invention characterized in that a continuously variable transmission comprises;
a push arm with a power roller and a drive roller,
a support frame at an input side for supporting a supporting point of the push arm,
a cam arm with a cam mount at upper side and lower side thereof,
an outer circumferential support frame for supporting the cam arm,
a drive arm with a pawl,
a ring gear having a ratchet mechanism of meshing with the pawl,
wherein the cam arm is capable of being stored or being pushed out, and a continuously variable speed drive is carried out by from the output on one-on-one level of the input made by the support frame at an input side to the continuously output, will be explained by the use of Figure 1.

Figure 1 gives an diagram showing a ring gear self-actuated control drive type of continuously variable transmission mechanism according to the present invention by the use of a main constitution member in a high gear region (Partially omitted as a matter of convenience), each 1a, b, c is a push arm with a power roller and a drive roller, 2a, b, c, d is a cam arm with a cam mount at upper side and lower side thereof, 3 is an outer cam, 4 is a support frame at input side, 5 is an outer circumferential support frame fixed to a chassis, 6 is a control gear which a shaft (15) is chassis fixed, 7a, b, c is a drive arm with a pawl (14) supported by a central shaft (13), 8 is a drive roller, 9 is a power roller, 10 is a ring gear with a ratchet mechanism, 11 is a planetary gear, 12 is a sun gear, 13 is a central shaft, 14 is a pawl, 15 is each shaft, 16 is a pinion gear which can carry out a drive for an opposite direction, r
is an amount of lift, A is an angle of the input, respectively, and arrows show a direction of a drive at each part, and a return spring etc., of each member is omitted.

That is, according to this embodiment, it is possible to support a shaft (15) of a push arm (1a, b, c) with a power roller (9) and a drive roller (8), a shaft (15) of a planetary gear (11) and a shaft (15) of a pinion gear. Further, it is possible to support a drive arm (7a, b, c) with a pawl (14) by a central shaft (13). Moreover, it is possible to reciprocate and drive the push arm (1a, b, c) by the use of the supporting point of the shaft (15) (a return spring is omitted). Moreover, it is possible to reciprocate and drive the drive arm (7a, b, c) by the use of the supporting point of the central shaft (13) (a return spring is omitted). Moreover, in an outer circumference of a planetary constitution formed by a ring gear (10) with a ratchet mechanism meshed with a pawl (14) of the drive arm (7a, b, c) (a return spring is omitted) by the rotation of a input direction of a pawl (14) of the drive arm (7a, b, c), it is possible to support a cam arm with a cam mount at upper side and lower side thereof (2a, b, c, d) to an outer circumferential support frame fixed to a chassis (5). And, it is possible to constitute a mechanism wherein an outer cam (3) making it possible to move the cam arm (2a, b, c, d) to a direction of both up and down (it is possible to move the cam arm to a direction of a central shaft (13) and a direction of the opposite side of the central shaft. A return spring is omitted.), and a control gear (6) wherein a shaft (15) capable of rotating and driving the outer cam (3) from side to side is fixed to a chassis, are put in outer circumference. In a figure, although an outer cam and a control gear are described, but there is no need to exist as long as it is possible to push out the cam arm universally.

Figure 1 gives an explanatory diagram showing a position which each member moves, in a high gear region wherein the rotation and movement of a control gear (6) in a direction of an arrow makes it possible to push the cam arm (2a, b, c, d) within a maximum amount of a lift shown as the "r". In Figure 1, at a side of the push arm (1a), via an input of an input direction shown by an arrow regarding a shaft of a planetary gear (11) integrated with a support frame (4) and a push arm, the power roller (9) (via a return spring) rotates while pushing a surface of the inner wall of an outer circumferential support frame partially, and the power roller is in a maximum position of the cam mount of the cam arm (2a). Pushing the power roller (9) of the push arm (1a) to a direction of an arrow at inner side (a direction of the central shaft) via a supporting point of a shaft (15) of the cam arm makes it possible to push the drive roller (8) to a direction of an arrow to push out the drive arm (7a) to a direction of the input shown by an arrow via a supporting point of the central shaft (13). And, Figure 1 shows a status that one way mechanism through both a pawl (14) of the drive arm (7a) and a ratchet mechanism of the ring gear (10) makes it possible to push out the push arm at a maximum to a direction of an input shown as an arrow from status of a drive speed formed by the output on one-on-one level of the input by the ring gear (from low gear region to high gear region), to make a rotational drive of a planetary gear (11) meshed with the ring gear (10) in a direction of an input shown in an arrow further to make a rotational drive of a pinion gear (16) meshed with the planetary gear (11) in an opposite direction of an input shown in an arrow, and thereby driving the sun gear (12) meshed with the pinion gear (16) to a direction of an input shown as an arrow at a maximum.

At a side of the push arm (1b), in a similar way, via an input of an input direction shown by an arrow regarding a shaft of a planetary gear (11) integrated with a support frame (4) and a push arm, the power roller (9) (via a return spring. Moreover, the power roller do not push a surface of the inner wall in a part that the cam mount of the cam arm is pushed out to a direction of the central shaft.) rotates while pushing a surface of the inner wall of an outer circumferential support frame partially, and the power roller is in a position after the power roller have passed the cam arm (2b). Pushing back the power roller (9) of the push arm (1b) to a direction of an outer circumference (an opposite direction to the central shaft) via a supporting point of a shaft (15) of the cam arm (via a return spring) makes it possible to push back the drive roller (8) to a direction of an input (via a return spring). And, it will be a status that the drive arm (7b) is also pushed back by one way mechanism through both a pawl (14) and a ratchet mechanism of the ring gear (10) to an opposite direction of an input under a condition of idling (via a return spring) makes it possible to be a status that a drive of the ring gear (10) to a direction of an input will stop. That is, it shows that a drive of a direction of an input shown as an arrow from the push arm (1a,c) to the ring gear (10), a rotational drive to a direction of an input shown as an arrow of the planetary gear (11) in a synchronization with a rotation of the sun gear (12) to a direction of an input shown as an arrow, and a rotational drive of the pinion gear (16) to an opposite direction of an input shown as an arrow.

At a side of the push arm (1c), in a similar way, via an input of an input direction shown by an arrow regarding a shaft of a planetary gear (11) integrated with a support frame (4) and a push arm, the power roller (9) (via a return spring) rotates while pushing a surface of the inner wall of an outer circumferential support frame partially, and the power roller is in a position in a middle when the power roller of the push arm just passes the cam arm (2d). And in a similar mechanism as a side of the push arm (1a), pushing the power roller (9) of the push arm (1c) to a direction of an arrow at inner side (a direction of the central shaft) via a supporting point of a shaft (15) of the cam arm makes it possible to push the drive roller (8) to a direction of an arrow to push out the drive arm (7c) to a direction of the input shown by an arrow via a supporting point of the central shaft (13). It shows a status of a drive similar to that of a side of a push arm (1a) that one way mechanism through both a pawl (14) of the drive arm (7c) and a ratchet mechanism of the ring gear (10) makes it possible to push out the push arm at a maximum to a direction of an input shown as an arrow from status of a drive speed formed by the output on one-on-one level of the input by the ring gear (from low gear region to high gear region), to make a rotational drive of a planetary gear (11) meshed with the ring gear (10) in a direction of an input shown in an arrow further to make a rotational drive of a pinion gear (16) meshed with the planetary gear (11) in an opposite direction of an input shown in an arrow, and thereby driving the sun gear (12) meshed with the pinion gear (16) to a direction of an input shown as an arrow at a maximum.

Figure 2 gives a drive image of each member in a low gear region regarding a drive on one-on-one level of the input.

Figure 2 gives a diagram showing drive positions of each member up to the cam mount of the cam arm (2a) shown divided within an input angle, "A". An input of an input direction shown by an arrow regarding a shaft of a planetary gear (11) integrated with a support frame (4) and a push arm, makes it possible to push the ring gear with the pawl (14) of the drive arm (7a) via a ratchet mechanism of a ring gear (10), and the pushing function obtained thus transmits to the planetary gear (11) meshing with the ring gear (10) and thereby transmitting to the sun gear at an output side meshing with the pinion gear (16). And a load of the sun gear at an output side transmits to the ring gear via the pinion gear (16) and the planetary gear (12), and thereby carrying out a drive of the ring gear to an opposite direction of an input. And a function of one way mechanism of the ring gear (10) with a ratchet mechanism meshing with the pawl (14) by the rotation of a input direction makes it possible to work a drive of the drive arm (7a) in an opposite direction of an input to push the drive roller (8) in an opposite direction of an input to work and drive the principle of leverage via a shaft (15) of the push arm (1a) with the drive roller (8) and the power roller (9) as a supporting point. And then the power roller (9) of the push arm (1a) pushes a surface of the inner wall of the outer circumferential support frame (5). And, under the condition that the pawl (14) keeps on meshing with a ratchet (in a form that a load of the output side canceled out with the input), the pawl integrated with the input when the rotation of the input states simultaneously, makes it possible to hold down the movement of the ring gear (10) which a load of the sun gear at the output side is transmitted to attain the output drive on one-on-one level of the input in an input direction shown as an arrow made by the ring gear (10) integrated with the support frame to carry out an orbital motion of the meshed planetary gear (11) which the rotation by itself is stopped, on one-on-one level of the input shown as an arrow in an integrated manner to carry out an orbital motion of the pinion gear which the rotation by itself is stopped, on one-on-one level of the input shown as an arrow in an integrated manner, in a similar way to carry out a drive of an input shown as an arrow in a form of including the meshed sun gear at the output side, in an integrated manner. This figure explains a low gear region.

Figure 3 gives a drive image of each member up to the cam mount of the cam arm within an input angle "A" in a high gear region.

Figure 3 shows drive positions of each member shown divided up to the cam mount of the cam arm within an input angle "A" in a high gear region. In a high gear region, an input of an input direction shown by an arrow regarding a shaft of a planetary gear (11) integrated with a support frame (4) and a push arm, makes it possible to push back the power roller (9) revolving around an inner side of the outer circumferential support frame (5) to the top of the cam mount of the cam arm (2a) to work and drive the principle of leverage via a shaft (15) of the push arm (1a) as a supporting point. And then, the drive roller (8) is pushed to a direction of an input shown as an arrow under the conditions that the drive roller (8) continues to push the drive arm (7a) to a direction of an input shown as an arrow via a supporting point of the central shaft (13), to drive the drive arm (7a) to a direction of an input shown as an arrow. And further, it is possible to attain a high gear drive from drive on one-on-one level of the input by an input direction shown as an arrow by the ring gear (10), under the conditions that the pawl of the drive arm (7a) is meshed with a ratchet mechanism of the ring gear (10) which a load at an output side is worked to an opposite direction of an input. Figure 3 shows a conditions that a drive of an input direction of the ring gear (10) faster than a speed of a drive of a revolution of the planetary gear (11) integrated with the rotation of the input makes it possible to add a planetary rotation of an input direction shown as an arrow to the revolution of the planetary gear (11) forcibly, to render a planetary rotation of the meshed pinion gear to an opposite direction of an input shown as an arrow, to attain a faster drive of an input direction forcibly comparing with than that of a rotation by an output on one-on-one revel of the input of the meshed sun gear (12) at an output side.

Figure 4 gives an explanatory diagram showing an example of a drive for controlling an input direction of a ring gear type continuously variable transmission mechanism of a mechanical structure capable of accommodating to a variable transmitted output from an input direction by the use of the ring gear as a gear at an output side (Partially omitted). Figure 4 shows those of a high gear region. Figure 4 shows those of the same constitution of a drive for controlling an input direction of a ring gear type continuously variable transmission mechanism of a mechanical structure capable of accommodating to a variable transmitted output from an input direction by the use of the ring gear as a gear at an output side except that the sun gear, the planetary gear and pinion gear. Figure shows a drive comprising:
a support frame at input side supporting a push arm (1a, b, c) with a power roller (9) and a drive roller (8) in the case that a side of a ring gear (10) is as a gear (10a) at an output side,
a drive arm (7a, b, c) with a pawl supported by a central shaft (13),
an external gear (output side gear) (10a) with a ratchet mechanism meshed with the pawl (14) of the drive arm (7a, b, c),
a cam arm (2a, b, c, d) with cam mounts at upper side and lower side thereof in an outer circumference of the gear (10a) at an output side,
a ring type of an outer circumferential support frame (5) supporting the cam arm,
an outer cam (3) capable of pushing the cam arm (2a, b, c, d),
a control gear (6) capable of controlling the rotation and motion of the outer cam (3). In figure, although there are an outer cam and a control gear, there are not necessary needed.

The input by the support frame makes it possible to render a load for a drive of the outside gear (10a) produced by meshing a ratchet mechanism of the output side gear (10a) with the pawl (14) of the drive arm (7a, b, c) to occur a drive of an opposite direction of the input for the drive arm (7a, b, c). A drive produced by pushing the drive roller (8) to an opposite direction of the input and thereby using the principle of leverage according to a supporting point of a shaft (15) of the push arm (1a, b, c) with the drive roller (8) and the power roller (9) makes it possible to push the power roller (9) of the push arm (1a, b, c) to the surface of the inner wall of the outer circumferential support frame, to force down and under a load of the gear (10a) continuing to mesh the pawl (14) with the ratchet mechanism, and thereby carrying out a drive on one-on-one revel of the input from the input direction by the gear (10a) integrated with the support frame. Moreover, the rotation and movement of the outer cam (3) by the control gear (6) etc., makes it possible to push the cam arm (2a, b, c, d) up to the maximum amount of lift (r) continuously to the inside direction (a direction of the central shaft) and thereby it being possible to push the power roller (9) every time that each power roller (9) passes the cam mount corresponding to the amount of lift (r) at each stage. And, a reciprocating motion of a drive produced by the principle of leverage of the drive roller (8) as a supporting point of the shaft (15) of the push arm (1a, b, c) makes it possible to occur a reciprocating motion of further drive produced by pushing and pushing back of the drive arm (7a, b, c) to a direction of the input by using the central shaft (15) as a supporting point. And according to the reciprocating motion of further drive produced by pushing and pushing back of the drive arm, makes it possible to attain from a drive on one-on-one revel of the input by means of the input direction by the gear (10a) at the output side further to a continuously variable transmission drive of the input direction using the output side gear (10a) as the ring gear side by using one way mechanism via the ratchet mechanism both the pawl (14) and the gear (10a) at the output side. The continuously variable transmission drive makes it possible to attain a variable transmission drive for an input direction continuously and universally. Moreover, the explanation of the movement of the low gear region and the high gear region will be clear from the above explanation of the other embodiment of the continuously variable transmission drive.

Figure 1 shows an example of the basic drive constitution according to the present invention. The outer cam 3 can be fixed with a chassis. Or the outer circumferential support frame (5) can be fixed with a chassis. And it is possible to use a constitution that the rotation and movement of the control gear (6) makes it possible to rotate and move the outer cam and the outer circumferential support frame for a different direction opposite to each other at the same time. Any constitutions makes it possible to obtain an universal change of the amount of pushing the cam arm by using the outer cam to obtain an universal change of an amount of lift regarding the cam mount of the cam arm according to a chassis fix of a shaft of the control gear (6). A direct rotation and movement mechanism of the outer cam (3) can be used. And a constitution of pushing each cam arm according to the other means. And an outer cam (3) can be set in an inner side of the outer circumferential support frame (5). An adoption of a rotation and movement mechanism of a power roller at a surface of the outer wall of the outer circumferential support frame (5), or an adoption of a rotation and movement mechanism of a control gear (6) electronically or mechanically using a rotation value at the output side makes it possible to attain a full automatic continuously variable transmission. It is possible to change some member or a position of the member and further to change a position of the output or the input etc., because of the use of the constitution by the planetary gear. Moreover, it is possible to adopt a constitution of rendering the slowing down input at the input side of the variable transmission according to the present constitution, or adopt a constitution of a mechanism of a speed up gear at the output side.

Further, a previous Japanese application of the JP 2012-202058 of the "A twin planet active drive continuously variable transmission", that is, a continuously variable transmission mechanism comprising:
a sun gear,
an parent-child planetary gear with one-way mechanism, meshing with the sun gear,
a push gear with a power roller, meshing with the parent-child planetary gear,
a support frame at an input side for supporting the parent-child planetary gear,
an outer circumferential support frame with a surface of an inner wall for supporting a cam arm,
wherein a rotation and movement of a ring gear running away from a load of an output side by an input can be controlled in a condition of from an input speed to a continuously variable transmission drive universally be means of the parent-child planetary gear having a constitution of continuously variable transmission to connect and drive a ring gear of a set of a secondary planetary gear at a secondary side by the one central shaft, with the sun gear integrated with the support frame of the planetary gear, and thereby ensuring an output drive on one-one-one revel to the input produced by the secondary sun gear at an output side via a support frame integrated with the ring gear of the set of the planetary gear and the sun gear, and also carrying out universally a change of a continuously output of the sun gear at an output side in a form of doing multiplication of an output of the continuously variable transmission. Such twin planet active drive continuously variable transmission can be incorporate into the present constitution of the continuously variable transmission according to the present invention at a single shaft as a central shaft.

Regarding the twin planet active drive continuously variable transmission, Figure 5 and Figure 6 gives a cross-sectional view showing an example of a constitution and a method of using a twin planet active drive continuously variable transmission (Partially omitted). That is, it is further embodiment in the case of the use of the secondary planetary gear. Although it is not shown in Figures, it is basically possible to incorporate a various sort of a continuously variable transmission in a portion surrounded by a dotted line B. Here, an example of a continuously variable transmission according to the present invention is incorporated in the present embodiment.

And, in Figure 5, as a center of a central shaft (25), in a continuously variable transmission set in a region of B shown in Figure 5 as an example of the present invention, the sun gear (12) is attached to and integrated with a support frame at a secondary side (24), a support frame at an input side (4) of the present invention can be attached to and integrated with a secondary ring gear (20), a secondary planetary gear (21) of a secondary support frame (24) integrated with the sun gear (12) meshed with the pinion gear (16) can be meshed with both a secondary sun gear (23) at an output side and a secondary ring gear (20). In this twin planet active drive continuously variable transmission, the secondary sun gear (23) at an output side become a final output.

Further, in Figure 6, as a center of a central shaft (25), as an example of the present invention, the sun gear (12) is attached to and integrated with a secondary ring gear (20), a secondary planetary gear (21) of a secondary support frame (24) integrated with a primary ring gear (10) of the present invention can mesh with a secondary ring gear (20), a secondary pinion gear (22) meshed with a secondary planetary gear (21) can be meshed with a secondary sun gear (23) at an output side. In this twin planet active drive continuously variable transmission, the secondary sun gear (23) at an output side also become a final output.

In the case of the low gear region, in Figure 5, a drive on one-on-one revel of an input integrated with a support frame (4) at an input side of a secondary ring gear (20), in a similar way, as well as a drive on one-on-one revel of the sun gear (12) integrated with a secondary support frame (24) meshed with a pinion gear (16) make it possible to carry out a drive on one-on-one revel of an input by stopping of rotation by itself of a secondary planetary gear (21) and making a revolution of a ring gear (20) and the secondary planetary gear (21) forcibly to attain an output drive on one-on-one revel of an input by driving the secondary sun gear (23) at an output side meshed with a secondary planetary gear (20) forcibly. In a simmer way, in Figure 6, a drive on one-on-one revel of an input of a sun gear (12) integrated with a secondary ring gear (20) meshed with a pinion gear (16), as well as a drive on one-on-one revel of an input of a ring gear (10) integrated with a secondary support frame (24) meshed with a planetary gear (11) make it possible to carry out a drive on one-on-one revel of an input by stopping of rotation by itself of a secondary planetary gear (21) and a pinion gear (22) forcibly to attain an output drive on one-on-one revel of an input by driving the secondary sun gear (23) at an output side meshed with a secondary pinion gear (22) forcibly to ensure an output on one-on-one revel of an input and thereby obtaining a stable low gear.

In the high gear region, an input of an input direction shown by an arrow regarding a shaft of a planetary gear (11) integrated with a support frame (4) and a push arm, makes it possible to push back the power roller (9) revolving around an inner side of the outer circumferential support frame (5) up to the top of the cam mount of the cam arm (2a) to work and drive the principle of leverage via a shaft (15) of the push arm (1a) as a supporting point. And then, the drive roller (8) is pushed to a direction of an input shown as an arrow under the conditions that the drive roller (8) continues to push the drive arm (7a) to a direction of an input shown as an arrow via a supporting point of the central shaft (13), to drive the drive arm (7a) to a direction of an input shown as an arrow. And further, it is possible to attain a high gear drive from drive on one-on-one level of the input by an input direction shown as an arrow by the ring gear (10), under the conditions that the pawl of the drive arm (7a) is meshed with a ratchet mechanism of the ring gear (10) which a load at an output side is worked to an opposite direction of an input. Since it is possible to mesh the planetary gear (21) of the secondary support frame (24) attached to and integrated with the sun gear (12) of the continuously variable transmission set in a region B shown in Figure 5, with both a secondary ring gear (20) integrated with a support frame (4) at an input side and a secondary sun gear (23) at an output side, in the secondary sun gear (23) at an output side, it is possible to attain a drive to an input direction continuously in a form of doing multiplication of a rotation of an output produced by rotating the sun gear (12) of the continuously variable transmission set in a region B shown in Figure 5. In Figure 6, since it is possible to mesh the secondary ring gear (20) attached to and integrated with the sun gear (12) of the continuously variable transmission set in a region B shown in Figure 6, with a secondary planetary gear (21) of the secondary support frame (24) integrated with a ring gear to mesh the secondary pinion gear (22) meshed with the secondary planetary gear (21), with the secondary sun gear (23) at an output side, in the secondary sun gear (23) at an output side, it is possible to attain a drive to an input direction continuously in a form of doing multiplication of a rotation of an output produced by rotating the sun gear (12) of the continuously variable transmission set in a region B shown in Figure 6. As a result, it is possible to obtain a high gear transmission with a high speed ratio.

In such embodiment according to the present invention, it is recognized that a twin planet active drive continuously variable transmission has an advantage effect that the use of the output of the continuously variable transmission according to the present invention by means of one central shaft makes it possible to drive a secondary planetary gear to transmit a power to a secondary sun gear in a form of doing multiplication of a rotation of an output produced by the continuously variable transmission to attain a double barreled continuously variable transmission drive capable of obtaining a drive from a low gear on one-on-one revel of the output to a high gear with a high speed ratio, and thereby it being possible to attain an universal, prompt continuously variable transmission. It will be recognized that it has an advantage that it is available as a compact continuously variable transmission with a high speed ratio without a complicated control system.

Moreover, a direct drive arm drive may be used instead of each 7 of the drive arm and the drive roller of each 1 of the push arm. It is possible to incorporate a constitution considering a return number of times or a speed of each 1 of the push arm, to change each planetary gear to a parent children planetary gear, to improve a speed ratio by adopting a constitution that a gear ration of each planetary gear makes it lager, a diameter of the meshed sun gear makes it smaller, or to combine a various sort of a constitution such as an incorporation of the other one way mechanism. In particular, a cam shape of each cam arm, a structure of a contact section of both the drive roller and the drive arm, a size, a shape, a number, an angle of the attachment, a position of each member, a member for supporting them, an incorporation of one way mechanism at a portion of the other member, an attachment means of a bearing, a return spring etc., can be changed depending on each application, and all these modified examples will be include in a scope of the present invention.

### Industrial applicability

It is possible to apply it as a new another application such as a variable transmission for bicycle etc., since it is a continuously variable transmission which comprises a set of the planetary gear arrangement by the one central axis capable of increasing a range of a shift transmission, and is simple and a small size.

### Description of the reference numerals

1a, b, c a push arm with a power roller and a drive roller
2a, b, c, d a cam arm
3 an outer cam
4 a support frame (at input side)
5 an outer circumferential support frame
6 a control gear
7a, b, c a drive arm with a pawl
8 a drive roller
9 a power roller
10 a ring gear with a ratchet mechanism
10a an external gear with a ratchet mechanism
11 a planetary gear
12 a sun gear
13,25 a central shaft
14 a pawl
15, 26 a shaft
16 a pinion gear
r an amount of lift
A an angle of the input
B an example of the continuously variable transmission according to the present invention
20 a secondary ring gear (a ring gear at a secondary side)
21 a secondary planetary gear (a planetary gear at a secondary side)
22 a secondary pinion gear (a pinion gear at a secondary side)
23 a secondary sun gear (a sun gear at a secondary side, a secondary sun gear at an output side)
24 a secondary support frame (a support frame at a secondary side)

## Claims

1. A continuously variable transmission comprises;
a push arm with a power roller and a drive roller,
a support frame at an input side for supporting a supporting point of the push arm,
a cam arm with a cam mount at upper side and lower side thereof,
an outer circumferential support frame for supporting the cam arm,
a drive arm with a pawl,
a ring gear having a ratchet mechanism of meshing with the pawl,
wherein the cam arm is capable of being stored or being pushed out, and a continuously variable speed drive is carried out by from the output on one-on-one level of the input made by the support frame at an input side to the continuously output.

2. A continuously variable transmission according to claim 1, wherein the transmission has further an outer cam with a cam mount in a direction of a central shaft at an outside of the outer circumferential support frame.

3. A continuously variable transmission according to claims 1 or 2, wherein the transmission has further a control gear meshing with a part of the outer cam.

4. A continuously variable transmission comprises;
a push arm with a power roller and a drive roller,
a sun gear at an output side,
a pinion gear meshing with the sun gear at an output side,
a planetary gear of meshing with the pinion gear,
a support frame at an input side for supporting a supporting point of the push arm and supporting a shaft of the pinion gear and a shaft of the planetary gear,
a cam arm with a cam mount at upper side and lower side thereof,
an outer circumferential support frame for supporting the cam arm,
a drive arm with a pawl,
a ring gear having a ratchet mechanism of meshing with the pawl,
wherein the cam arm is capable of being stored or being pushed out, and a continuously variable speed drive is carried out by from the output on one-on-one level of the input made by the support frame at an input side to the continuously output.

5. A continuously variable transmission according to claim 4,
wherein the transmission has further an outer cam with a cam mount in a direction of a central shaft at an outside of the outer circumferential support frame.

6. A continuously variable transmission according to claims 4 or 5,
wherein the transmission has further a control gear meshing with a part of the outer cam.

7. A continuously variable transmission according to any one of claims 4 to 6, wherein an input at a single central shaft produced by the support frame at an input side integrated with the secondary ring gear of a set of the secondary planetary gear attains a drive by connecting with the sun gear integrated with the secondary support frame of the secondary planetary gear through the planetary gear and the pinion gear to carry out a drive by from an output made by the sun gear at the output side on one-on-one level of the input made by support frame at an input side to an output of a continuously variable transmission.

8. A continuously variable transmission according to any one of claims 4 to 6, wherein via the planetary gear and the pinion gear, the sun gear integrated with the secondary ring gear of a set of the secondary planetary gear attains a drive by connecting the ring gear integrated with the secondary support frame of the secondary planetary gear and the pinion gear to carry out a drive by from an output made by the sun gear at the output side on one-on-one level of the input made by the support frame at an input side to an output of a continuously variable transmission.
